(19) Europäisches Patentamt

European Patent Office

Office européen des brevets

(11) **EP 0 752 093 B1**

(12) **FASCICULE DE BREVET EUROPEEN**

(45) Date de publication et mention
de la délivrance du brevet:
**23.12.1998 Bulletin 1998/52**

(21) Numéro de dépôt: **95914387.6**

(22) Date de dépôt: **20.03.1995**

(51) Int Cl.⁶: **G01F 1/32**

(86) Numéro de dépôt international:
**PCT/FR95/00340**

(87) Numéro de publication internationale:
**WO 95/25944 (28.09.1995 Gazette 1995/41)**

(54) **COMPTEUR DE FLUIDE A TOURBILLONS COMPORTANT UNE CONDUITE PROFILEE**

WIRBELSTRÖMUNGSMESSGERÄT MIT EINEM PROFILIERTEN MESSROHR

VORTEX FLOWMETER COMPRISING A PROFILED DUCT

(84) Etats contractants désignés:
**AT CH DE DK ES GB IT LI NL SE**

(30) Priorité: **23.03.1994 FR 9403407**

(43) Date de publication de la demande:
**08.01.1997 Bulletin 1997/02**

(73) Titulaire: **SCHLUMBERGER INDUSTRIES S.A.
92120 Montrouge (FR)**

(72) Inventeurs:
- **ZIELINSKA, Barbara
F-91120 Palaiseau (FR)**
- **ZIKIKOUT, Souad
F-75020 Paris (FR)**

(56) Documents cités:
**EP-A- 0 465 182**     **DE-A- 2 426 169**
**FR-A- 2 339 841**     **GB-A- 2 066 463**

## Description

La présente invention est relative à un compteur de fluide à tourbillons comportant au moins un obstacle apte à générer des tourbillons de fluide selon un phénomène oscillatoire et permettant d'obtenir un nombre de Strouhal sensiblement constant pour les faibles nombres de Reynolds.

Les compteurs de fluide ou débitmètres à tourbillons sont largement connus et sont généralement constitués d'une conduite dans laquelle circule un fluide dont on souhaite mesurer le volume et/ou le débit. Un obstacle est disposé à l'intérieur de la conduite dans l'écoulement de fluide de telle manière que lorsque l'écoulement de fluide rencontre ledit obstacle des tourbillons de fluide soient générés et se détachent de l'obstacle selon un phénomène oscillatoire. Un tel compteur comprend également des moyens pour déterminer le volume de fluide à partir de ces oscillations. Ces moyens sont la plupart du temps situés sur l'obstacle. Le principe de mesure du volume de fluide dans un tel compteur est basé sur le fait que la fréquence d'oscillation des tourbillons est approximativement proportionnelle à la vitesse du fluide dans la conduite et les moyens précités détectent un signal correspondant aux oscillations desdits tourbillons. Ce signal peut être par exemple une pression différentielle.

Le but d'un compteur de fluide à tourbillons est d'effectuer des mesures précises et fiables du débit ou du volume de fluide traversant la conduite pour de larges gammes de nombres de Reynolds.

Pour ce faire, le nombre de Strouhal qui est égal au rapport du produit de la fréquence d'oscillation par le diamètre de l'obstacle sur la vitesse du fluide doit être constant pour des nombres de Reynolds variés (le nombre de Reynolds étant égal au rapport du produit de la vitesse du fluide par le diamètre de la conduite sur la viscosité dynamique du fluide).

Les différentes recherches menées dans ce domaine au cours des dernières années ont permis de concevoir des compteurs de fluide à tourbillons avec des formes et des tailles d'obstacles optimisées et qui sont tout à fait satisfaisants pour des nombres de Reynolds élevés comme par exemple de l'ordre de 260000, là où l'écoulement a un fort caractère turbulent.

Par contre, aux faibles nombres de Reynolds, par exemple de l'ordre de 30000, l'écoulement devient de plus en plus laminaire ce qui change la nature des tourbillons. Ceci a pour conséquence que la courbe de calibration de ces compteurs de fluide n'est pas linéaire pour les faibles nombres de Reynolds.

On connaît par le brevet GB N° 2142725 un compteur de fluide à tourbillons qui comprend, d'une part, une conduite en forme de Venturi, et, d'autre part, un obstacle placé dans le col de ladite conduite et apte à générer des tourbillons selon un phénomène oscillatoire ainsi que des moyens pour détecter la présence desdits tourbillons en aval dudit obstacle.

Ce compteur de fluide permet d'augmenter de 30% le nombre de Reynolds au droit du col de la conduite en forme de Venturi. Toutefois, la partie divergente d'une conduite en forme de Venturi présente un angle assez faible, inférieur à 8°, afin que la couche limite de l'écoulement de fluide ne se décolle pas des parois du divergent en créant ainsi une recirculation de fluide qui aurait pour conséquence d'augmenter les pertes de charge. Compte tenu des diamètres de conduites qui sont mentionnés dans le brevet précité, il apparaît clairement qu'une augmentation des pertes de charge n'est pas souhaitée.

En raison de cette configuration de la conduite, la pression du fluide dans la partie divergente de ladite conduite varie progressivement si bien que les tourbillons qui se détachent de l'obstacle ont une forme qui varie, induisant par là même une variation du nombre de Strouhal.

En outre, un compteur de fluide tel que décrit dans le brevet GB N° 2142725 présente une grande longueur ce qui est un inconvénient lorsque le compteur est destiné à un environnement très particulier pour lequel l'une des principales exigences est la compacité dudit compteur.

On connaît d'après les documents GB-A-2066463 et DE-A-2426169 un compteur de fluide à tourbillons comprenant une conduite profilée à l'intérieur de laquelle est positionné un obstacle générateur de tourbillons.

Le document EP-A-0465182 décrit un compteur de fluide à tourbillons qui comprend toutes les caractéristiques énoncées dans le préambule de la revendication 1.

La présente invention vise à pallier ces inconvénients en proposant un compteur de fluide à tourbillons compact et pour lequel le nombre de Strouhal est sensiblement constant pour les faibles nombres de Reynolds de l'écoulement du fluide, tout en étant également sensiblement constant pour les nombres de Reynolds élevés, afin d'améliorer les performances dudit compteur sur une large gamme de nombres de Reynolds.

La présente invention a ainsi pour objet un compteur de fluide à tourbillons comprenant

-   une conduite de diamètre intérieur maximal D dans laquelle s'écoule le fluide,
-   au moins un obstacle disposé au milieu de l'écoulement de fluide et apte à générer des tourbillons de fluide selon un phénomène oscillatoire, ledit obstacle ayant une forme générale allongée de dimensions longitudinale D1 et transversale d perpendiculaires à la direction d'écoulement du fluide,
-   des moyens pour détecter le signal correspondant aux oscillations desdits tourbillons et pour en déduire le volume de fluide, caractérisé en ce que ladite conduite présente un profil intérieur formé successivement d'amont en aval, d'une première portion réduisant progressivement le diamètre intérieur de ladite conduite à une valeur D1 et ayant une paroi qui forme avec la direction générale d'écoulement du fluide un angle continûment variable, ledit angle ayant une valeur nulle aux endroits de la conduite où le diamètre de ladite première portion est respectivement égal à D et D1, d'une deuxième portion de diamètre constant D1 dans laquelle est placée l'obstacle et d'une troisième portion de conduite ramenant le diamètre intérieur de la conduite à sa valeur initiale D et étant apte à provoquer le décollement de la couche limite de l'écoulement de fluide au droit d'une extrémité dite aval de ladite deuxième portion de conduite.

La Demanderesse a découvert d'une manière tout à fait inattendue qu'en provoquant le décollement brusque de la couche limite de l'écoulement de fluide au droit d'une extrémité dite aval de la deuxième portion de conduite il se créait une surpression au droit de cette extrémité, cette surpression locale ayant pour effet de confiner les tourbillons qui se détachent de l'obstacle dans la deuxième portion de la conduite et ainsi les contraint à garder une taille constante.

Il est particulièrement important que le décollement de la couche limite ait lieu précisément au droit de l'extrémité aval de la deuxième portion de conduite pour que la création de la surpression soit efficace.

Il s'ensuit que pour les faibles nombres de Reynolds de l'écoulement du fluide, la fréquence d'oscillation des tourbillons est directement proportionnelle à la vitesse du fluide et le nombre de Strouhal est donc sensiblement constant.

Ainsi la linéarité du compteur de fluide est considérablement améliorée pour les faibles nombres de Reynolds.

Selon une caractéristique de l'invention, la troisième portion de conduite présente une arête vive à une de ses extrémité dite amont confondue avec l'extrémité aval de la deuxième portion de conduite et a, en aval de ladite arête vive, une paroi intérieure qui forme avec la direction d'écoulement du fluide un angle $\alpha$ constant compris entre 9 et 20°.

De préférence, l'angle $\alpha$ est compris entre 10 et 15°.

Selon une autre caractéristique de l'invention, la troisième portion de conduite est munie à une de ses extrémités dite amont confondue avec l'extrémité aval de la deuxième portion d'une collerette de diamètre extérieur D1 et de diamètre intérieur D2 inférieur à D1 et qui présente un bord intérieur formant une arête vive.

Selon une caractéristique de l'invention, la collerette a une dimension longitudinale $\frac{D1 - D2}{2}$ comprise entre 2 et 5% du diamètre D1 de la deuxième portion de conduite.

Selon une caractéristique de l'invention, la collerette a dans un plan contenant l'axe de symétrie de la conduite une section locale uniforme de forme triangulaire dont la pointe constitue le bord intérieur local de ladite collerette.

Avantageusement, la première portion de conduite ne doit pas présenter d'arêtes vives afin d'éviter que la couche limite de l'écoulement de fluide ne se détache à l'entrée du rétrécissement, créant par là même des perturbations dans ledit écoulement et donc dans les oscillations des tourbillons de fluide.

Plusieurs formes du profil intérieur de la première portion de conduite ont été essayées et ont fourni de bons résultats.

Notamment, le profil intérieur local de la première portion de conduite peut être formé, dans un plan contenant l'axe de symétrie de la conduite, d'amont en aval successivement de deux arcs de cercles dont les concavités sont inversées, correspondant à des cercles de rayons respectifs r et R et vérifiant la relation

$$r = (a^2 + b^2) / 2b(\mu + 1)$$

où $a = \sqrt{b[2(R + r) - b]}$, $b = \frac{D - D1}{2}$ et

$$: \mu = \frac{R}{r}$$

Le profil intérieur local de la première portion de conduite peut également être formé, dans un plan contenant l'axe de symétrie de la conduite d'une partie d'une courbe sinusoïdale.

Selon d'autres caractéristiques de l'invention:

- le diamètre D1 de la deuxième portion de conduite a une valeur comprise entre 60 et 90% de la valeur du diamètre initial D,
- le diamètre D1 a une valeur de préférence comprise entre 70 et 80% de la valeur du diamètre initial D,
- l'obstacle est placé à une distance de la première portion de conduite comprise entre 0,5 D1 et D1.
- la deuxième portion de conduite a une longueur comprise entre 1,5 et 3 fois le diamètre D1,
- le rapport d/D1 est compris entre 0,15 et 0,30,
- les moyens pour détecter le signal correspondant aux oscillations des tourbillons et pour en déduire le volume de fluide sont assujettis à l'obstacle,
- l'obstacle présente une face amont et une face aval parallèles entre elles et perpendiculaires à la direction d'écoulement du fluide ainsi que deux faces latérales symétriques conférant audit obstacle une section transversale en forme de trapèze, la base dudit trapèze étant située vers l'amont,
- les moyens pour détecter le signal correspondant aux oscillations des tourbillons et pour en déduire le volume de fluide comprennent deux canaux principaux longitudinaux, parallèles entre eux et ménagés symétriquement dans l'obstacle à proximité des faces latérales de celui-ci, ainsi que plusieurs canaux secondaires également répartis et reliant lesdits canaux principaux perpendiculairement auxdites faces latérales ainsi qu'un capteur relié, d'une part, aux canaux principaux, et d'autre part, à un circuit électronique permettant de déduire le volume de fluide dudit signal détecté,

- les moyens pour détecter le signal correspondant aux oscillations des tourbillons et pour en déduire le volume de fluide comprennent une plaque disposée au milieu de l'écoulement de fluide en aval de l'obstacle et dans la deuxième portion de la conduite, ladite plaque ayant une dimension longitudinale h perpendiculaire à la direction d'écoulement du fluide et une section transversale rectangulaire formée par deux grandes faces dites latérales parallèles à la direction d'écoulement du fluide et deux petites faces dites respectivement amont et aval, deux canaux principaux longitudinaux parallèles qui sont ménagés dans ladite plaque à proximité de ladite face amont, chacun desdits canaux principaux étant relié à une seule desdites faces latérales par l'intermédiaire de plusieurs canaux secondaires perpendiculaires et également répartis, ainsi qu'un capteur relié, d'une part, aux canaux principaux, et d'autre part, à un circuit électronique permettant de déduire le volume de fluide dudit signal détecté,

- la face amont de la plaque a une dimension transversale comprise entre 0,1 et 0,4 fois la dimension transversale d de l'obstacle,

- la face amont de la plaque est située à une distance de la face amont de l'obstacle comprise entre 3 et 7d,

- les canaux principaux ont un diamètre légèrement inférieur à la dimension transversale de la face amont de la plaque et lesdits canaux principaux sont décalés l'un par rapport à l'autre dans la direction d'écoulement du fluide,

D'autres caractéristiques et avantages apparaîtront au cours de la description qui va suivre donnée uniquement à titre d'exemple non limitatif, faite en se référant aux dessins annexés et sur lesquels:

- la figure 1 est une vue schématique en coupe dans un plan contenant l'axe de symétrie de la conduite d'un compteur de gaz à tourbillons selon l'invention,

- la figure 2 est une vue schématique en coupe dans un plan contenant l'axe de symétrie de la conduite et perpendiculaire à celui de la figure 1 du compteur représenté sur cette même figure.

- les figures 3a à 3c sont des vues schématiques partielles en coupe dans un plan contenant l'axe de symétrie de la conduite de plusieurs exemples de réalisation de la paroi de la première portion de conduite du compteur selon l'invention,

- la figure 3d est une variante de réalisation de la paroi de la première portion de conduite représentée aux figures 3a à 3c,

- la figure 4 est une vue schématique en perspective de l'obstacle du compteur de gaz à tourbillons représenté aux figures 1 et 2,

- la figure 5 est une vue schématique en coupe dans un plan contenant l'axe de symétrie de la conduite d'un compteur de gaz à tourbillons selon une variante de l'invention,

- la figure 6 est une vue schématique en coupe dans un plan perpendiculaire à celui de la figure 5 du compteur représenté sur cette même figure,

- la figure 7 est une vue schématique en perspective de la plaque 14 du compteur de gaz à tourbillons représenté aux figures 5 et 6,

- la figure 8 est une vue schématique en coupe dans un plan perpendiculaire à l'axe de symétrie de la conduite d'une variante de réalisation de la troisième portion de conduite du compteur de gaz à tourbillons selon l'invention,

- la figure 9 est une vue schématique partielle en coupe dans un plan contenant l'axe de symétrie de la conduite de la troisième portion de conduite représentée à la figure 8,

- la figure 10 est une vue d'un graphique représentant les courbes de calibration respectives d'un compteur de gaz à tourbillons selon l'invention (A) et selon l'art antérieur (B).

- la figure 11 représente un schéma simplifié d'un circuit électronique de détermination du volume de gaz à partir de la détection de la pression différentielle

- la figure 12 représente un détecteur de crête qui est utilisé dans le circuit de la figure 11

- la figure 13 représente l'opération de détection de crête effectuée par le détecteur de crête de la figure 12 sur une crête

- la figure 14 montre une exemple représentatif des signaux respectifs à l'entrée et à la sortie du détecteur de crête de la figure 12.

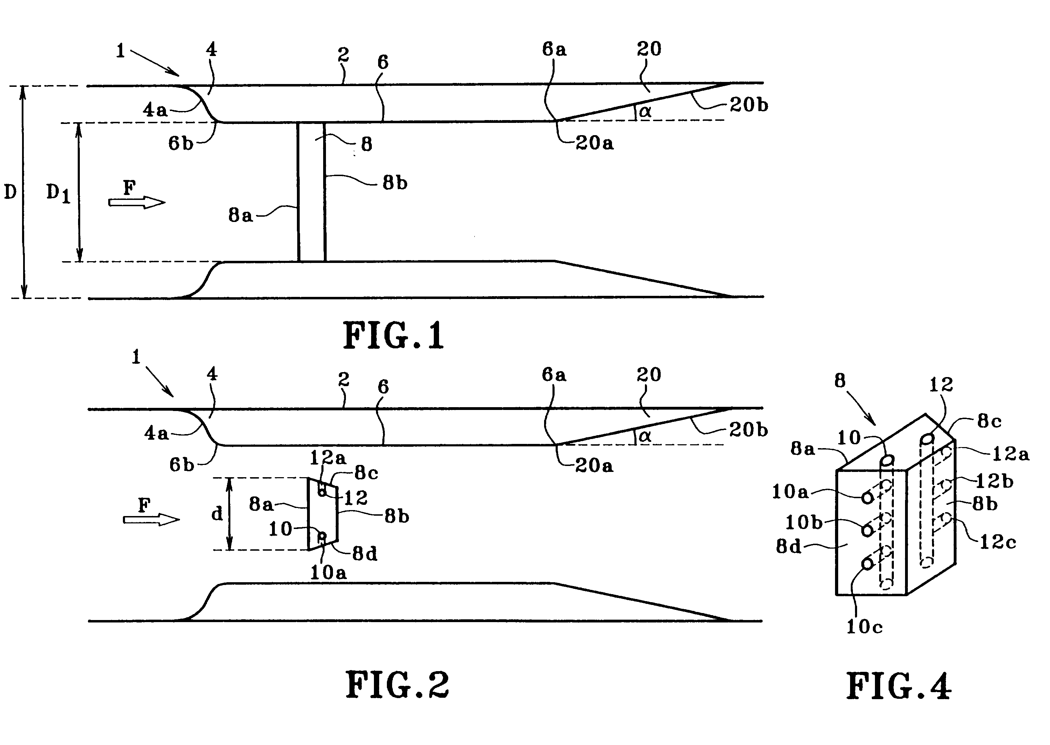

Comme représenté aux figures 1, 2, 5 et 6 et désigné dans son ensemble par la référence notée 1, le compteur de fluide à tourbillons conforme à l'invention est un compteur de gaz parfaitement adapté pour mesurer un volume de gaz, pour de faibles nombres de Reynolds, c'est à dire pour les nombres de Reynolds qui sont approximativement inférieurs à 33000 et pouvant même aller jusqu'à 16500.

Un tel compteur comprend une conduite 2 à l'intérieur de laquelle circule le gaz dont on souhaite mesurer le volume.

Ainsi que représenté sur les figures 1, 2, 5 et 6, la conduite 2 a un diamètre intérieur maximal D et présente un profil intérieur formé successivement d'amont en aval de trois portions de conduite ayant chacune une caractéristique technique différente.

La première portion 4 réduit progressivement le diamètre intérieur maximal D de la conduite 2 à une valeur D1 par l'intermédiaire d'une paroi profilée 4a.

Cette paroi profilée forme avec la direction générale d'écoulement du gaz un angle qui varie continûment depuis l'intersection de ladite paroi avec la conduite 2 de diamètre maximal D, intersection pour laquelle ledit angle prend une valeur nulle, jusqu'à l'intersection de la paroi avec une deuxième portion de conduite de diamètre D1 et pour laquelle l'angle prend de nouveau une valeur nulle.

Cette disposition est tout à fait avantageuse du fait que l'écoulement de gaz ne rencontre pas d'arêtes vives lors de son entrée dans le compteur et ainsi il n'est pas perturbé par la formation de turbulences. L'écoulement est ainsi accéléré dans la deuxième portion de conduite de diamètre D1, ce qui permet pour les faibles vitesses de gaz d'obtenir un régime d'écoulement plus proche de la turbulence.

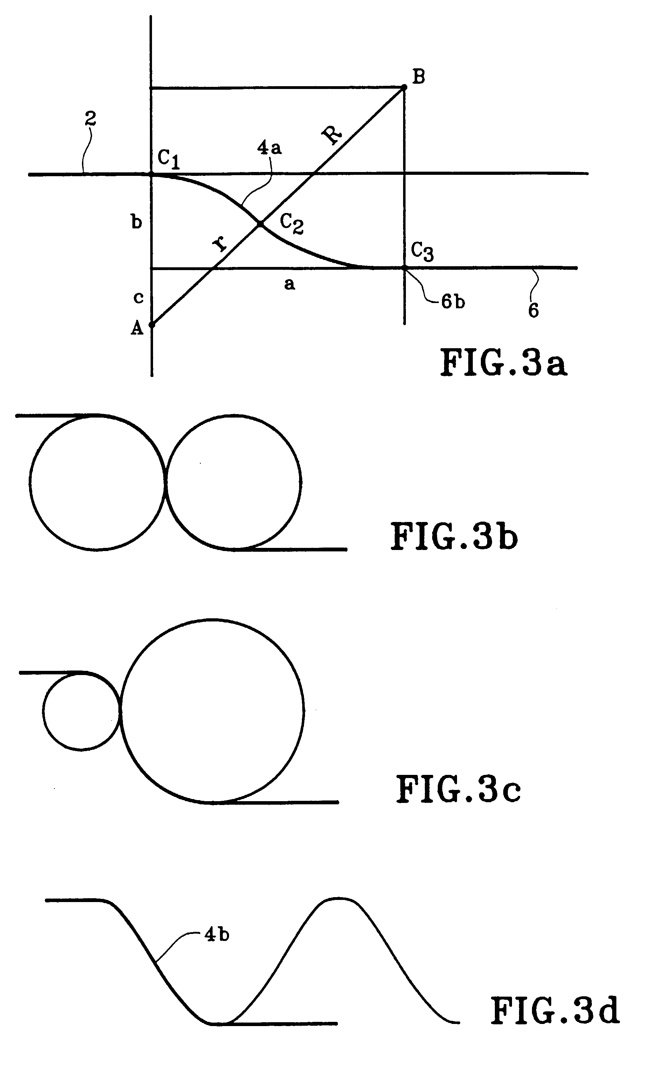

On peut par exemple utiliser une première portion 4 de conduite dont la paroi profilée 4a a la forme qui est représentée sur la figure 3a.

Sur cette figure représentant une vue partielle de la première portion 4 de conduite dans un plan contenant l'axe de symétrie de la conduite et donc parallèle à la direction d'écoulement du gaz, il apparaît que le profil intérieur local est formé successivement de l'amont vers l'aval de deux arcs de cercles aux concavités inversées et raccordés en un point. Un premier arc de cercle correspond à un premier cercle de centre A et de rayon r et est tangent à la conduite de diamètre D en un point de contact C1. Un second arc de cercle est raccordé en un point C2 au premier arc de cercle et est tangent à la deuxième portion 6 de conduite de diamètre D1 en un point C3. Le second arc de cercle correspond à un second cercle de centre B et de rayon R.

La condition pour que les deux arcs de cercle se rejoignent au point C2 s'écrit

$$(r+R)^2 = a^2 + (R+c)^2 \qquad (1)$$

ce qui permet d'obtenir a compte tenu du fait que c = r-b:

$$a = \sqrt{b[2(R + r) - b]} \qquad (2)$$

et en élevant au carré l'égalité (2) on obtient

$$r = \frac{a^2 + b^2}{2b(\mu + 1)} \qquad (3)$$

avec

$$\mu = R/r$$

et $b = \frac{D - D1}{2}$

Selon les valeurs attribuées aux rayons r et R des cercles, pour des diamètres D et D1 fixés, il est possible de conférer à la paroi de la première portion 4 de conduite le profil souhaité.

Ainsi, en fixant la valeur de D1 égale à 72% de D pour r=R on obtient la paroi profilée 4b représentée à la figure 3b et pour R=1,75r, la paroi profilée 4c a l'allure représentée sur la figure 3c.

Selon une variante de l'invention représentée à la figure 3d, la paroi 4d de la première portion 4 de conduite a dans un plan contenant l'axe de symétrie de la conduite un profil intérieur local qui est formé d'une partie d'une courbe sinusoïdale.

Le profil intérieur de la conduite 2 est formé en aval de la première portion de conduite de la deuxième portion 6 précédemment mentionnée et qui présente un diamètre intérieur D1 constant sur toute sa longueur.

Le diamètre réduit D1 de la deuxième portion 6 de conduite a une valeur comprise entre 60 et 90% de la valeur du diamètre initial maximal D de ladite conduite.

En effet, si la valeur de D1 est inférieure à 60% de la valeur de D , la perte de charge devient rédhibitoire et la fréquence d'oscillation devient trop élevée pour être mesurée.

Par ailleurs, pour une valeur de D1 supérieure à 90% de la valeur de D, l'écoulement de gaz n'est pas suffisamment accéléré.

Préférentiellement, le diamètre D1 a une valeur comprise entre 70 et 80% de la valeur du diamètre initial D.

Par exemple, le diamètre D1 a une valeur égale à 72% de la valeur du diamètre initial D.

Le compteur de gaz à tourbillons 1 selon l'invention comprend également un obstacle 8 disposé dans la deuxième portion 6 de conduite de diamètre D1. Cet obstacle 8 est placé au milieu de l'écoulement de gaz de telle manière que lorsque ledit écoulement rencontre ledit obstacle des tourbillons de gaz soient générés et se détachent de l'obstacle selon un phénomène oscillatoire.

Un tel obstacle 8, représenté sur les figures 1, 2, 4, 5 et 6, a une forme générale allongée de dimension longitudinale $D_1$ correspondant à sa hauteur et qui est perpendiculaire à la direction d'écoulement du gaz dans la conduite 2. L'obstacle 8 a une dimension transversale d, correspondant à sa largeur et présente une section transversale sensiblement uniforme dans tous les plans parallèles au plan de la figure 2 et qui peut revêtir des formes variées.

Avantageusement le rapport $d/D_1$ est compris entre 0,15 et 0,3 et est par exemple égal à 0,23. En effet, si $d/D_1$ est supérieur à 0,30, le phénomène des oscillations tend à s'affaiblir. Inversement, si $d/D_1$ est inférieur à 0,15, le phénomène de détachement des tourbillons n'est plus cohérent sur toute la dimension longitudinale de l'obstacle.

Ainsi que représenté sur les figures précédemment mentionnées, l'obstacle 8 présente une face amont 8a et une face aval 8b toutes les deux planes et parallèles entre elles, ladite face amont 8a étant plus grande que ladite face aval 8b. Le plan de ces deux faces est perpendiculaire à la direction d'écoulement du gaz.

L'obstacle 8 présente également deux faces latérales 8c et 8d symétriques qui forment avec la face amont 8a un angle constant de manière à conférer à la section transversale dudit obstacle une forme trapézoïdale dont la base est située vers l'amont.

Dans la deuxième portion 6 de la conduite, l'obstacle 8 est placé à proximité de la première portion 4 de conduite pour laisser suffisamment d'espace en aval à la formation des tourbillons.

Plus précisément, la face amont 8a de l'obstacle 8 est placé à une distance de la première portion 4 de conduite comprise entre 0,5 D1 et D1.

En effet, pour une distance inférieure à 0,5D1, l'écoulement de gaz qui atteint l'obstacle présente un profil de vitesse qui n'est pas encore stabilisé.

De même, si la distance est supérieure à D1, d'une part, le profil de vitesse de l'écoulement de gaz développe une couche limite pouvant induire de forts tourbillons secondaires qui perturbent les tourbillons oscillants dits principaux et, d'autre part, le compteur de gaz perd de sa compacité.

Par exemple, la face amont 8a de l'obstacle 8 est placé à une distance de la première portion 4 de conduite égale à 0,6D1.

Il convient de noter que plusieurs obstacles de formes identiques ou différentes placés l'un derrière l'autre dans le sens d'écoulement du gaz peuvent être utilisés au lieu d'un seul obstacle.

La deuxième portion 6 de conduite a une longueur comprise entre 1,5 et 3 fois le diamètre D1 pour conférer au compteur de gaz une bonne compacité tout en ménageant un espace suffisant pour la formation des tourbillons.

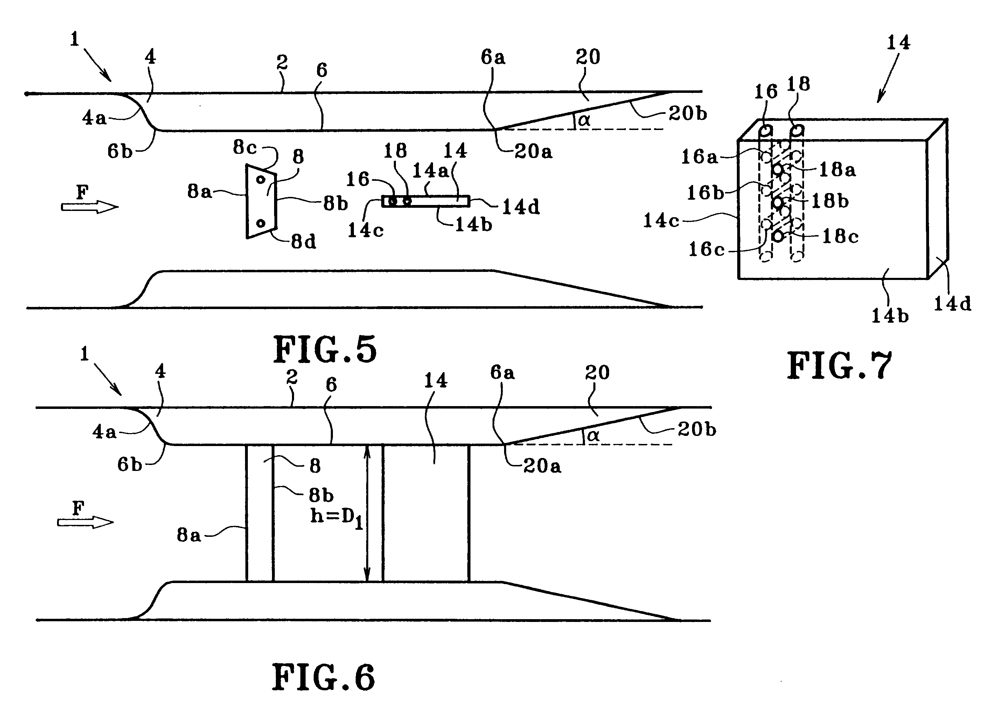

Cette longueur est par exemple égale à deux fois le diamètre D1. Conformément à l'invention, le compteur de gaz à tourbillons 1 comprend des moyens pour détecter le signal correspondant aux oscillations des tourbillons générés par l'obstacle 8 et pour en déduire le volume du gaz. Il convient de noter que l'homme du métier peut également déduire directement de la détection de ce signal le débit du gaz. Ces moyens peuvent être assujettis à l'obstacle 8 comme cela est représenté aux figures 2 et 4.

Sur ces figures, il est visible que les moyens pour détecter le signal correspondant aux oscillations des tourbillons et pour en déduire le volume du gaz comprennent deux canaux principaux 10 et 12 parallèles entre eux et ménagés longitudinalement dans l'obstacle 8 à proximité des faces latérales 8c et 8d dudit obstacle. Ces canaux 10 et 12 sont symétriques par rapport à un plan médian contenant l'axe de symétrie de la conduite 2 et perpendiculaire au plan contenant la section transversale de l'obstacle 8. Les moyens précités comprennent également plusieurs canaux secondaires, par exemple au nombre de trois par canal principal, 10a, 10b, 10c et 12a, 12b, 12c et qui sont également répartis le long de la dimension longitudinale des canaux principaux 10 et 12, perpendiculairement auxdits canaux principaux. Ces canaux secondaires relient les canaux principaux aux faces latérales 8c et 8d de l'obstacle 8. Les canaux secondaires 10a, 10b, 12a, 12b ont un diamètre sensiblement égal à celui des canaux principaux. Chacun des canaux principaux 10 et 12 est relié par exemple à un capteur thermique non représenté, qui va détecter la pression différentielle induite dans lesdits canaux principaux par le détachement des tourbillons.

On peut également utiliser un capteur de pression.

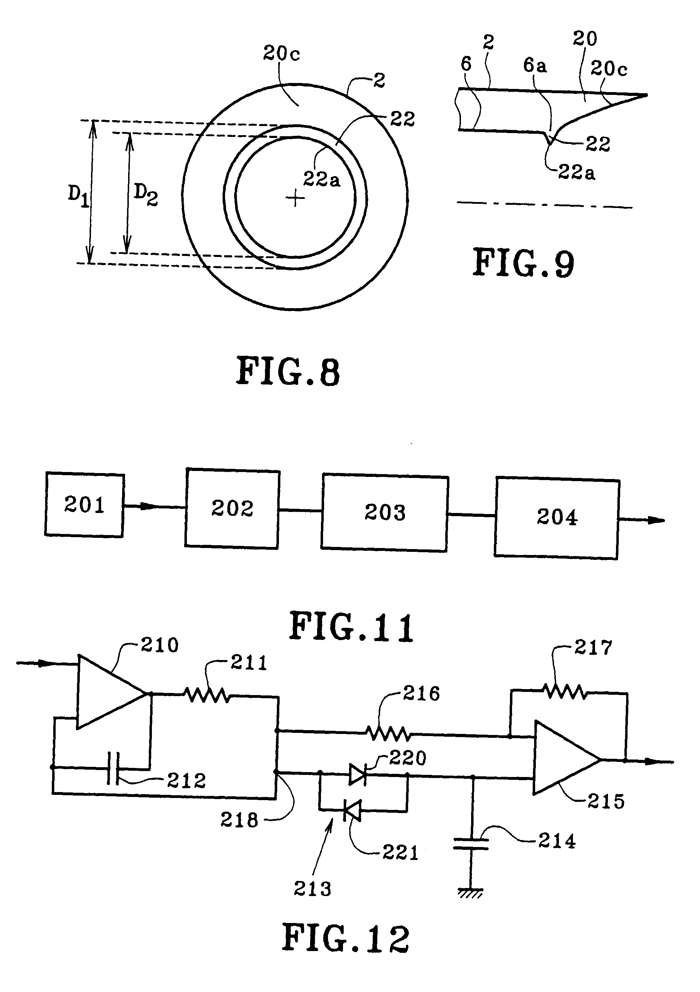

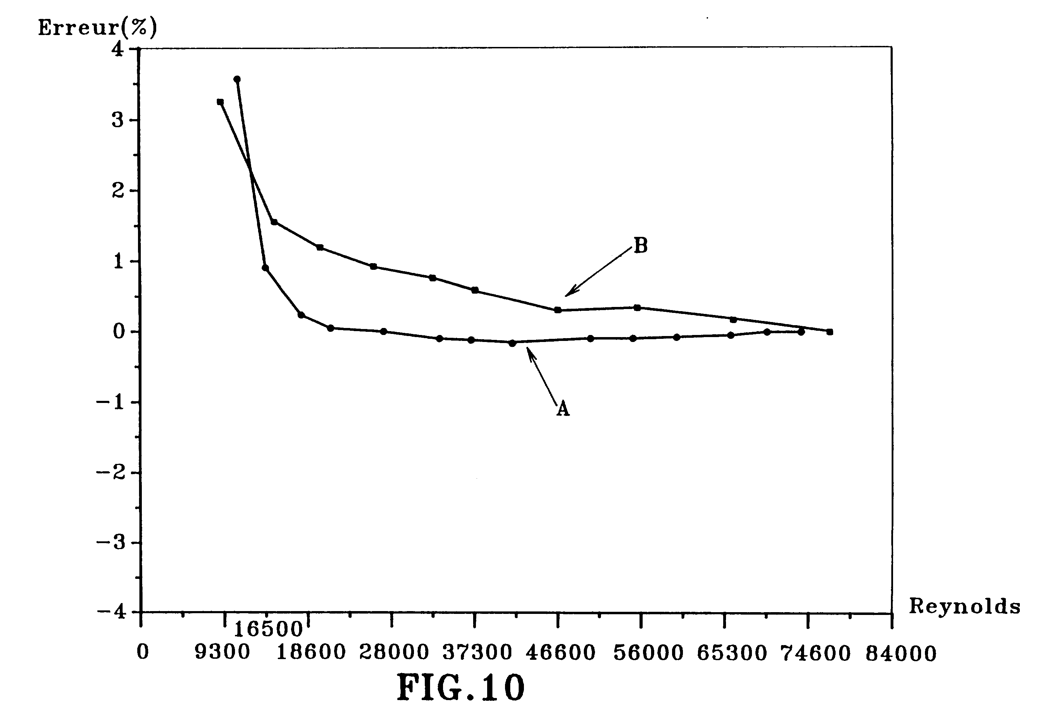

La figure 11 représente un schéma bloc simplifié d'un circuit électronique permettant, à partir de la détection de la pression différentielle par le capteur 201, successivement de délivrer au moyen d'un amplificateur 202 un signal alternatif à l'entrée d'un détecteur de crête 203, de transformer au moyen dudit détecteur de crête ce signal alternatif délivré en un signal impulsionnel où chaque impulsion représente un volume unitaire de gaz et de compter ensuite à l'aide d'un compteur 204 le nombre d'impulsions pour obtenir un volume de gaz.

Comme représenté à la Figure 12 un détecteur de crête 203 comprend par exemple un amplificateur 210 avec une résistance 211 et un condensateur 212, un dispositif à seuil 213 comprenant deux diodes 220, 221 montées tête-bêche, un condensateur 214 jouant le rôle d'une mémoire, un amplificateur différentiel 215 et des résistances 216, 217. Chaque diode 220 ou 221 peut être la jonction d'un transistor à effet de champ.

L'amplificateur 210, la résistance 211 et le condensateur 212 isolent le signal à l'entrée du condensateur 214. Chaque diode est caractérisée par un seuil et affiche une chute de tension lorsqu'elle est dans un état conducteur ou passant. Lorsque l'amplitude du signal au point 218 augmente au dessus du seuil de la diode 220, la diode sera dans un état conducteur et la valeur du signal de tension au point 218 diminuée de la chute de tension de la diode 220 sera mémorisée dans le condensateur 214. L'amplificateur différentiel 215 compare la valeur de la tension au point 218 avec la valeur de la tension du condensateur 214 et fournit un signal élévé lorsque la tension au point 218 est supérieure à la tension du condensateur 214.

Lorsqu'une crête est atteinte et que l'amplitude du signal diminue, la différence entre la valeur du signal au point 218 et la valeur du signal mémorisé par le condensateur 214 tombe au dessous du seuil de la diode 220 et la diode 220 devient alors non-conductrice. La valeur du signal mémorisée dans le condensateur 214 est alors fixée. Quand l'amplitude du signal au point 218 chute au dessous de la valeur du signal mémorisé par le condensateur 214, l'amplificateur 215 fournit un signal bas montrant qu'une crête s'est présentée. Quand l'amplitude du signal chute au dessous de la valeur du signal mémorisée dans le condensateur 214 d'une valeur correspondant au seuil de la diode 221, celle-ci devient passante et la valeur du signal mémorisée dans le condensateur 214 chute avec la valeur du signal au point 218 diminuée de la valeur de la chute de tension de la diode 221. Quand une crête négative est atteinte et passée, la diode 221 deviendra encore non-conductrice et l'amplificateur 215 indiquera un changement d'état quand le signal au point 218 augmentera au dessus de la valeur du signal mémorisée dans le condensateur 214.

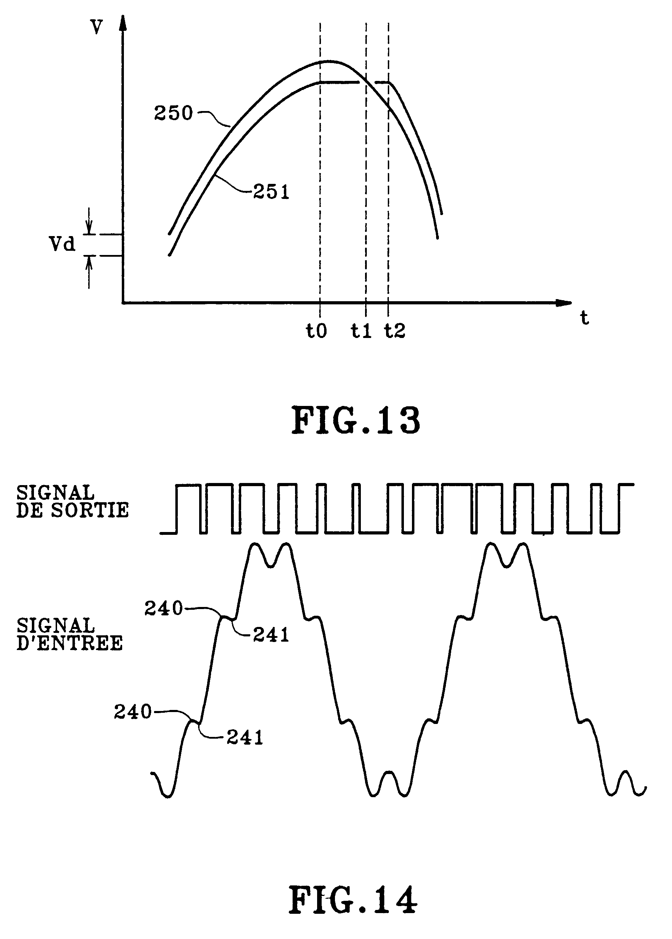

La figure 13 montre la variation de la tension du premier signal au point 218 par la courbe 250 et la variation de la tension du condensateur par la courbe 251. Au début, la tension du condensateur 251 est égale à la tension du signal 250 diminuée de la valeur Vd correspondant à la chute de tension de la diode 220 et l'amplificateur 215 fournit un signal élevé. Quand une crête est atteinte au temps t0 et que la tension du signal 250 diminue en dessous de la valeur de seuil de la diode 220, la tension du condensateur 251 est fixée. Au temps t1 la tension du signal 250 chute en dessous de la tension mémorisée dans le condensateur 251 et la sortie de l'amplificateur 215 fournit un signal bas. Au temps t2 la différence entre la tension du signal et la tension mémorisée dans le condensateur est plus grande que la valeur du seuil de la diode 221 et la tension du condensateur suit encore la tension du premier signal.

La Figure 14 montre le signal de sortie du circuit de la Figure 12 par comparaison avec un exemple de signal d'entrée. On peut considérer le signal d'entrée comme un signal sinusoïdal de fréquence élevée mais d'une amplitude faible superposée à un bruit de grande amplitude qui produit de grandes variations d'amplitude du signal. Malgré ces variations, le changement du sens du signal d'entrée à chaque crête positive 240 ou à chaque crête négative 241 est marqué par un changement du sens du signal de sortie. Le signal de sortie peut être utilisé immédiatement par le compteur 204 pour délivrer le nombre d'impulsions et donc le volume de gaz. Connaissant le temps entre deux impulsions, il est également très facile d'obtenir la valeur du débit de gaz.

Selon une variante de l'invention représentée aux figures 5 à 7, les moyens pour détecter le signal correspondant aux oscillations des tourbillons et pour en déduire le volume du gaz sont situés en aval de l'obstacle 8 et comprennent un élément en forme de plaque 14 disposé dans la deuxième portion 6 de conduite au milieu de l'écoulement du gaz. La plaque 14 a une dimension longitudinale D1 correspondant à sa hauteur h et qui est perpendiculaire à la direction d'écoulement du gaz. La plaque 14 est formée, d'une part, de deux grandes faces 14a et 14b parallèles entre elles et à la direction d'écoulement du gaz et appelées faces latérales et, d'autre part, de deux petites faces 14c et 14d parallèles entre elles et perpendiculaires auxdites grandes faces et appelées respectivement faces amont 14c et aval 14d. La face amont 14c de la plaque 14 est placée à une distance de la face amont 8a de l'obstacle 8 comprise entre 3 et 7d. Par exemple, la plaque 14 est placée à une distance de la face amont 8a égale à 4d. Comme représenté sur les figures 5 et 7, ces faces confèrent à la section transversale de la plaque 14 une forme rectangulaire. La forme de la plaque 14 est avantageuse car elle constitue un obstacle aux arêtes vives qui provoque un décollement de l'écoulement du gaz au contact de la face amont 14c appelée également bord d'attaque, créant ainsi une zone turbulente qui favorise l'impact des tourbillons alternativement sur chacune des faces latérales 14a et 14b, conduisant ainsi à améliorer le signal créé. Deux canaux principaux 16 et 18 parallèles entre eux sont ménagés longitudinalement dans la plaque 14 à proximité de la face amont 14c. Ces canaux 16 et 18 s'étendent à l'intérieur de la plaque 14 depuis la partie supérieure de celle-ci jusqu'à une distance inférieure à la hauteur h de ladite plaque. Plusieurs canaux secondaires 16a, 16b, 16c et 18a, 18b, 18c sont également répartis le long de la dimension longitudinale des canaux principaux 16 et 18 de manière à relier perpendiculairement chacun desdits canaux principaux à une seule des faces latérales 14a, 14b de la plaque 14.

Par exemple, chaque canal principal 16, (resp.18) est relié à une des faces latérales 14a, (resp.14b) de la plaque 14 par l'intermédiaire de trois canaux secondaires 16a, 16b, 16c, (resp.18a, 18b, 18c) de diamètre sensiblement égal à celui des canaux principaux. Les deux canaux principaux 16, 18 sont reliés par exemple à un capteur thermique non représenté qui va détecter l'écoulement provoqué par la pression différentielle induite dans lesdites canaux par le détachement des tourbillons. La dimension transversale de la face amont 14c, sa largeur, est comprise entre 0,1 et 0,4d et est par exemple égale à 0,25d. Le diamètre des canaux principaux 16, 18 est légèrement inférieur à la largeur de la plaque 14 si bien que lesdits canaux sont décalés l'un par rapport à l'autre dans la direction d'écoulement du gaz et sont disposés le plus près possible du bord d'attaque de ladite plaque 14 afin de récupérer la meilleure information possible sur le signal.

Cette variante est avantageuse étant donné que le signal ainsi obtenu sur la plaque aura une amplitude plus grande que celui obtenu sur l'obstacle.

En outre, les canaux permettent de filtrer tous les bruits accompagnant le signal en raison des forces de viscosités que rencontre le gaz dans lesdits canaux et l'on obtient donc un rapport signal/bruit amélioré.

Selon une autre variante de l'invention, non représentée sur les figures, les moyens pour détecter le signal correspondant aux oscillations des tourbillons et pour en déduire le volume de gaz comprennent notamment deux transducteurs ultrasonores situés en aval de l'obstacle 8 dans la deuxième portion de conduite 6 et assujettis aux parois de celle-ci de manière diamétralement opposée (dans cette variante, il n'est pas utile de prévoir une plaque comme celle décrite précédemment). L'un des transducteurs émet un signal ultrasonore qui est modulé par les oscillations des tourbillons, reçu par l'autre transducteur et démodulé afin de déduire la fréquence d'oscillation et donc le débit et le volume de gaz.

Conformément à l'invention, le compteur de gaz à tourbillons 1 comprend également une troisième portion 20 de conduite qui est formée à partir de l'extrémité aval 6a de la deuxième portion 6 de conduite de diamètre constant D1. La troisième portion 20 de conduite ramène le diamètre intérieur de la conduite 2 à sa valeur initiale D. Cette troisième portion 20 est apte à provoquer le décollement de la couche limite de l'écoulement de gaz au droit de l'extrémité dite aval 6a de la deuxième portion 6 de conduite.

Contrairement à la forme arrondie de l'intersection des première 4 et seconde 6 portions de conduite, la troisième portion 20 présente une arête vive 20a à une de ses extrémités dite amont, qui est confondue avec l'extrémité aval 6a de la deuxième portion de conduite, ainsi que représenté sur les figures 1,2,5 et 6.

La troisième portion 20 de conduite a une paroi 20b de forme tronconique qui s'étend depuis l'arête vive 20a jusqu'à la conduite de diamètre maximal D en formant un angle a constant avec la direction d'écoulement du gaz. Cet angle $\alpha$ est généralement compris entre 9 et 20°.

Préférentiellement, l'angle $\alpha$ est compris entre 10 et 15° et est par exemple égal à 10,78°.

En raison de l'expansion brusque de la conduite selon un angle donné après la portion droite 6 de conduite dans laquelle sont formés les tourbillons suivant un phénomène oscillatoire, il se produit une diminution de la vitesse du gaz et une augmentation de sa pression. La Demanderesse a pu constater que cette caractéristique de l'invention créait un décollement de l'écoulement de gaz au droit et en aval de l'arête vive 20a et donnait ainsi naissance à une barrière de pression au sortir de la deuxième portion 6 de conduite. Cette barrière de pression a pour fonction de confiner les tourbillons de gaz à l'intérieur de la deuxième portion 6 de conduite ce qui permet de maintenir constante la taille desdits tourbillons, donc d'avoir un nombre de Strouhal constant, notamment pour les faibles nombres de Reynolds de l'écoulement du gaz, et ainsi d'obtenir une fréquence d'oscillation directement proportionnelle à la vitesse du gaz. L'angle d'expansion de la troisième portion 20 de conduite doit être judicieusement choisi pour permettre de ramener la pression à une valeur acceptable. En effet, un angle d'expansion supérieur à 20° produirait une recirculation de gaz intense et la variation de vitesse du gaz induite conduirait à accroître la turbulence du gaz et non pas à créer une barrière de pression efficace pour maintenir constante la taille des tourbillons.

Par ailleurs, pour un angle d'expansion inférieur à 9°, la pression augmenterait graduellement le long de la troisième portion 20 de conduite ce qui serait insuffisant pour maîtriser la taille des tourbillons. Contrairement à la présente invention, il convient de remarquer que dans les divergents des conduites en forme de Venturi, l'angle d'expansion varie continûment et a une valeur locale inférieure à 8° permettant ainsi d'avoir une pression qui varie graduellement et d'éviter les phénomènes de décollement de la couche limite de gaz qui sont responsables de fortes pertes de charge.

Selon une variante de l'invention, représentée aux figures 8 et 9, la troisième portion 20 de conduite est munie d'une collerette 22 à une de ses extrémités dite amont qui est confondue avec l'extrémité aval 6a de la deuxième portion de conduite.

Cette collerette 22 est fixée à l'intersection des deuxième 6 et troisième 20 portions de conduite et présente un bord intérieur 22a situé sur un diamètre intérieur D2 inférieur à D1 et formant une arête vive, le diamètre extérieur de ladite collerette étant égal à D1.

Dans un plan perpendiculaire à la direction d'écoulement du gaz tel que représenté à la figure 8, la collerette 22 a une forme de couronne. Pour que l'arête vive 22a de la collerette 22 puisse provoquer le décollement de la couche limite et créer ainsi une surpression locale qui va confiner les tourbillons de gaz à l'intérieur de la deuxième portion 6 de conduite, la dimension longitudinale $\frac{D_1-D_2}{2}$ de ladite collerette 22, ou sa hauteur, doit être comprise entre 2 et 5% du diamètre D1 de ladite deuxième portion 6. En effet, si cette dimension est inférieure à 2% du diamètre D1, la zone de décollement de la couche limite est trop petite pour créer une surpression efficace au droit de l'extrémité aval 6a de la deuxième portion 6 de conduite. Inversement, si la dimension est supérieure à 5% du diamètre D1, la zone de décollement est très importante ce qui crée une zone de surpression instationnaire perturbant la répétabilité du signal.

Dans un plan contenant l'axe de symétrie de la conduite, la collerette 22 possède une section locale par exemple en forme de triangle dont la pointe constitue le bord intérieur 22a de ladite collerette dans ce plan. Comme représenté à la figure 9, la forme de la section locale supérieure de la collerette 22 est un triangle dont la pointe est dirigée vers le bas. La forme de la section locale inférieure de la collerette 22 non représentée sur la figure 9 est symétrique par rapport à l'axe de symétrie de la conduite.

Pour cette variante, la paroi intérieure 20c de la troisième portion 20 de conduite ne forme pas nécessairement un angle constant avec la direction d'écoulement du gaz.

Le compteur de fluide à tourbillons selon l'invention présente également l'avantage d'être compact étant donné qu'il est moins long que ceux de l'art antérieur.

Afin de prouver la supériorité du compteur de fluide à tourbillons selon la présente invention par rapport à un compteur selon l'art antérieur, la Demanderesse a procédé à des essais dont les résultats sont représentés sur la figure 10.

Ces essais ont été pratiqués consécutivement sur deux compteurs de gaz à tourbillons dont le premier, celui de l'art antérieur, comprend une conduite droite de diamètre D égal à 100mm dans laquelle s'écoule le gaz et un obstacle de section transversale trapézoïdale apte à générer des tourbillons et muni de moyens pour détecter le signal correspondant aux oscillations des tourbillons et pour en déduire le volume du gaz. L'obstacle et les moyens précédemment cités sont analogues à ceux décrits dans l'exposé ci-dessus en référence aux figures 1, 2 et 4.

Le second compteur de gaz, celui de la présente invention, est représenté aux figures 1, 2 et 4.

Les essais ont consisté à relever l'erreur relative commise sur la détermination du volume de gaz traversant chacun des compteurs par rapport à un compteur d'étalonnage, pour des débits compris dans une gamme allant de 50 à 450 m$^3$/h, correspondant à une gamme de nombres de Reynolds allant de 9300 à 84000.

Ainsi, la figure 10 représente pour chaque compteur de gaz l'erreur relative en pourcentage en fonction du nombre de Reynolds et les courbes A et B obtenues sont les courbes de calibration respectivement du compteur conforme à l'invention et de celui de l'art antérieur. Par conséquent, ces courbes montrent clairement que le compteur de gaz selon l'invention permet d'améliorer de façon très sensible la linéarité dudit compteur pour les faibles nombres de Reynolds.

Les compteurs de gaz selon la présente invention présentent notamment une bonne linéarité pour des nombres de Reynolds inférieurs à 33000 et jusqu'à 16500.


**Revendications**

1. Compteur de fluide à tourbillons (1) comprenant

- une conduite (2) de diamètre intérieur maximal D dans laquelle s'écoule le fluide,
- au moins un obstacle (8) disposé au milieu de l'écoulement de fluide et apte à générer des tourbillons de fluide selon un phénomène oscillatoire, ledit obstacle (8) ayant une forme générale allongée de dimensions longitudinale D1 et transversale d perpendiculaires à la direction d'écoulement du fluide,
- des moyens (10, 10a, 10b, 10c, 12, 12a, 12b, 12c, 14, 16, 16a, 16b, 16c, 18, 18a, 18b, 18c, 200-221) pour détecter le signal correspondant aux oscillations des tourbillons et pour en déduire le volume de fluide, ladite conduite(2) présentant un profil intérieur formé successivement d'amont en aval, d'une première portion (4) réduisant progressivement le diamètre intérieur de ladite conduite à une valeur $D_1$ et ayant une paroi intérieure (4a, 4b, 4c, 4d) qui forme avec la direction générale d'écoulement du fluide un angle continûment variable, ledit angle ayant une valeur nulle aux endroits de la conduite où le diamètre de ladite première portion (4) est respectivement égal à D et D1, d'une deuxième portion (6) de diamètre constant D1 dans laquelle est placée l'obstacle (8) et d'une troisième portion (20) de conduite ramenant le diamètre intérieur de la conduite (2) à sa valeur initiale D, caractérisé en ce que la troisième portion de conduite est apte à provoquer le décollement de la couche limite de l'écoulement de fluide au droit d'une extrémité dite aval (6a) de ladite deuxième portion (6) de conduite.

2. Compteur de fluide à tourbillons selon la revendication 1, caractérisé en ce que la troisième portion (20) de conduite présente une arête vive (20a) à une de ses extrémités dite amont confondue avec l'extrémité aval (6a) de la deuxième portion (6) de conduite et a en aval de ladite arête vive (20a), une paroi intérieure (20b) qui forme avec la direction d'écoulement du fluide un angle $\alpha$ constant compris entre 9 et 20°.

3. Compteur de fluide à tourbillons selon la revendication 2, caractérisé en ce que l'angle $\alpha$ est de préférence compris entre 10 et 15°.

4. Compteur de fluide à tourbillons selon la revendication 1, caractérisé en ce que la troisième portion (20) de conduite est munie à une de ses extrémités dite amont confondue avec l'extrémité aval (6a) de la deuxième portion (6) d'une collerette (22) de diamètre extérieur D1 et de diamètre intérieur D2 inférieur à D1 et qui présente un bord intérieur (22a) formant une arête vive.

5. Compteur de fluide à tourbillons selon la revendication 4, caractérisé en ce que la collerette (22) a une dimension longitudinale $\frac{D1 - D2}{2}$ compris entre 2 et 5% du diamètre D1 de la deuxième portion (6) de conduite.

6. Compteur de fluide à tourbillons selon la revendication 4 ou 5, caractérisé en ce que la collerette (22) a dans un plan contenant l'axe de symétrie de la conduite une section locale uniforme de forme triangulaire dont la pointe constitue le bord intérieur local (22a) de ladite collerette.

7. Compteur de fluide à tourbillons selon l'une des revendications précédentes, caractérisé en ce que la paroi intérieure (4a, 4b, 4c) de la première portion (4) de la conduite a un profil intérieur local qui est formé, dans un plan contenant l'axe de symétrie de la conduite, d'amont en aval successivement de deux arcs de cercles dont les concavités sont inversées, correspondant à des cercles de rayons respectifs r et R et vérifiant la relation

$$r = (a^2 + b^2)/2b(\mu+1)$$

où $a = \sqrt{b[2(R + r) - b]}$,
$b = \frac{D - D1}{2}$ et

$$\mu = \frac{R}{r}$$

8. Compteur de fluide à tourbillons selon l'une des revendications 1 à 6, caractérisé en ce que la paroi intérieure (4d) de la première portion (4) de la conduite a un profil intérieur local qui est formé dans un plan contenant l'axe de symétrie de la conduite d'une partie d'une courbe sinusoïdale.

9. Compteur de fluide à tourbillons selon l'une des revendications 1 à 8, caractérisé en ce que le diamètre D1 de la deuxième portion (6) de conduite a une valeur comprise entre 60 et 90% de la valeur du diamètre initial D.

10. Compteur de fluide à tourbillons selon la revendication 9, caractérisé en ce que le diamètre D1 a une valeur de préférence comprise entre 70 et 80% de la valeur du diamètre initial D.

11. Compteur de fluide à tourbillons selon l'une des revendications précédentes, caractérisé en ce que la deuxième portion (6) de conduite a une longueur comprise entre 1,5 et 3 fois le diamètre D1.

12. Compteur de fluide à tourbillons selon l'une des revendications précédentes, caractérisé en ce que le rapport d/D1 est compris entre 0,15 et 0,30.

13. Compteur de fluide à tourbillons selon la revendication 1, caractérisé en ce que l'obstacle (8) présente une face amont (8a) et une face aval (8b) parallèles entre elles et perpendiculaires à la direction d'écoulement du fluide ainsi que deux faces latérales (8c, 8d) symétriques conférant audit obstacle (8) une section transversale en forme de trapèze, la base dudit trapèze étant située vers l'amont.

14. Compteur de fluide à tourbillons selon les revendications 1 et 13, caractérisé en ce que la face amont (8a) de l'obstacle (8) est placé à une distance de la première portion (4) de conduite comprise entre 0,5D1 et D1.

15. Compteur de fluide à tourbillons selon l'une des revendications précédentes, caractérisé en ce que les moyens pour détecter le signal correspondant aux oscillations des tourbillons et pour en déduire le volume de fluide sont assujettis à l'obstacle (8).

16. Compteur de fluide à tourbillons selon la revendication 15, caractérisé en ce que les moyens pour détecter le signal correspondant aux oscillations des tourbillons et pour en déduire le volume de fluide comprennent deux canaux principaux (10, 12) longitudinaux, parallèles entre eux et ménagés symétriquement dans l'obstacle (8) à proximité des faces latérales (8c, 8d) de celui-ci, ainsi que plusieurs canaux secondaires (10a, 10b, 10c, 12a, 12b, 12c) également répartis et reliant lesdits canaux principaux (10, 12) perpendiculairement auxdites faces latérales (8c, 8d), et un capteur relié, d'une part, aux canaux principaux (10, 12) et, d'autre part, à un circuit électronique (202-221) permettant de déduire le volume de fluide dudit signal détecté.

17. Compteur de fluide à tourbillons selon l'une des revendications 1 à 14, caractérisé en ce que les moyens pour détecter le signal correspondant aux oscillations des tourbillons et pour en déduire le volume de fluide comprennent une plaque (14) disposée au milieu de l'écoulement de fluide en aval de l'obstacle (8) et dans la deuxième portion (6) de la conduite, ladite plaque (14) ayant une dimension longitudinale D1 perpendiculaire à la direction d'écoulement du fluide et une section transversale rectangulaire formée par deux grandes faces (14a, 14b) dites latérales parallèles à la direction d'écoulement du fluide et deux petites faces (14c, 14d) dites respectivement amont et aval, deux canaux principaux (16, 18) longitudinaux parallèles qui sont ménagés dans ladite plaque (14) à proximité de ladite face amont (14c), chacun desdits canaux principaux étant relié à une seule desdites faces latérales (14a, 14b) par l'intermédiaire de plusieurs canaux secondaires (16a, 16b, 16c, 18a, 18b, 18c) perpendiculaires et également répartis, et un capteur relié, d'une part, aux canaux principaux (16, 18) et d'autre part, à un circuit électronique (202-221) permettant de déduire le volume de fluide dudit signal détecté.

18. Compteur de fluide à tourbillons selon la revendication 17, caractérisé en ce que la face amont (14c) de la plaque (14) a une dimension transversale comprise entre 0,1 et 0,4 fois la dimension transversale d de l'obstacle (8).

19. Compteur de fluide à tourbillons selon les revendications 13 et 17, caractérisé en ce que la face amont (14c) de la plaque (14) est située à une distance de la face amont (8a) de l'obstacle (8) comprise entre 3 et 7d.

20. Compteur de fluide à tourbillons selon les revendications 17 et 19, caractérisé en ce que les canaux principaux (16, 18) ont un diamètre légèrement inférieur à la dimension transversale de la face amont (14c) de la plaque (14) et en ce que lesdits canaux principaux (16, 18) sont décalés l'un par rapport à l'autre dans la direction d'écoulement du fluide.

21. Compteur de fluide à tourbillons selon la revendication 16 ou 17, caractérisé en ce que le capteur est un capteur thermique.

**22.** Compteur de fluide à tourbillons selon la revendication 16 ou 17, caractérisé en ce que le capteur est un capteur de pression.

**Patentansprüche**

1. Wirbel-Fluidzähler (1) mit

   - einer Rohrleitung (2) mit einem inneren maximalen Durchmesser D, in der das Fluid strömt,
   - wenigstens einem Hindernis (8), das in der Mitte der Fluidströmung angeordnet und zum Erzeugen von Fluidwirbeln in einem Schwingungsvorgang geeignet ist, wobei das Hindernis (8) eine allgemein längliche Form mit einer longitudinalen Abmessung D1 und einer transversalen Abmessung d hat, jeweils senkrecht zur Strömungsrichtung des Fluids,
   - Mitteln (10, 10a, 10b, 10c, 12, 12a, 12b, 12c, 14, 16, 16a, 16b, 16c, 18, 18a, 18b, 18c, 200-221) zum Detektieren des Signals, das den Schwingungen der Wirbel entspricht, und zum Bestimmen das Volumen des Fluids hieraus, wobei die Rohrleitung (2) eine innere Kontur hat, die in Strömungsrichtung nacheinander durch einen ersten Abschnitt (4), der fortschreitend den inneren Durchmesser der Rohrleitung auf einen Wert D1 reduziert und eine innere Wandung (4a, 4b, 4c, 4d) hat, die mit der allgemeinen Strömungsrichtung des Fluids einen kontinuierlich veränderlichen Winkel bildet, wobei der Winkel an den Stellen der Rohrleitung, an denen der Durchmesser des ersten Abschnitts im wesentlichen gleich zu D und D1 ist, einen Wert von Null aufweist, einen zweiten Abschnitt (6) mit konstantem Durchmesser D1, in dem das Hindernis (8) angeordnet ist, und einen dritten Abschnitt (20) der Rohrleitung gebildet ist, der den inneren Durchmesser der Rohrleitung (2) auf seinen Anfangswert D zurückführt, dadurch gekennzeichnet, daß der dritte Abschnitt der Rohrleitung geeignet ist, das Ablösen der Grenzschicht der Fluidströmung an einem stromabwärts liegenden Ende (6a) des zweiten Abschnitts (6) der Rohrleitung hervorzurufen.

2. Wirbel-Fluidzähler nach Anspruch 1, dadurch gekennzeichnet, daß der dritte Abschnitt (20) der Rohrleitung an einem seiner stromaufwärts liegenden Enden, das mit dem stromabwärts liegenden Ende (6a) des zweiten Abschnitts (6) der Rohrleitung zusammenfällt, eine scharfe Kante (20a) aufweist und stromabwärts der scharfen Kante (20a) eine innere Wandung (20b) hat, die mit der Strömungsrichtung des Fluids einen zwischen 9 und 20° liegenden konstanten Winkel α bildet.

3. Wirbel-Fluidzähler nach Anspruch 2, dadurch gekennzeichnet, daß der Winkel α vorzugsweise zwischen 10 und 15° liegt.

4. Wirbel-Fluidzähler nach Anspruch 1, dadurch gekennzeichnet, daß der dritte Abschnitt (20) der Rohrleitung an einem seiner stromaufwärts liegenden Enden, das mit dem stromabwärts liegenden Ende (6a) des zweiten Abschnitts (6) zusammenfällt, mit einem Kragen (22) versehen ist, dessen äußerer Durchmesser D1 beträgt, dessen innerer Durchmesser D2 kleiner ist als D1 und der einen inneren Rand (22a) hat, der eine scharfe Kante bildet.

5. Wirbel-Fluidzähler nach Anspruch 4, dadurch gekennzeichnet, daß der Kragen (22) eine longitudinale Abmessung $\frac{D1 - D2}{2}$ hat, die zwischen 2 und 5% des Durchmessers D1 des zweiten Abschnitts (6) der Rohrleitung beträgt.

6. Wirbel-Fluidzähler nach Anspruch 4 oder 5, dadurch gekennzeichnet, daß der Kragen (22) in einer die Symmetrieachse der Rohrleitung enthaltenden Ebene einen lokalen, gleichmäßigen, dreieckförmigen Querschnitt aufweist, dessen Spitze den inneren lokalen Rand (22a) des Kragens bildet.

7. Wirbel-Fluidzähler nach einem der vorstehenden Ansprüche, dadurch gekennzeichnet, daß die innere Wandung (4a, 4b, 4c) des ersten Abschnitts (4) der Rohrleitung eine lokale, innere Kontur hat, die in einer die Symmetrieachse der Rohrleitung enthaltenden Ebene in Strömungsrichtung nacheinander durch zwei Kreisbogen gebildet ist, deren Konkavitäten umgekehrt sind, die zwei Kreisen mit den Radien r bzw. R entsprechen und die der Beziehung

$$r = (a^2 + b^2)/2b(\mu+1)$$

oder $a = \sqrt{b[2(R + r) - b]}$, genügen, wobei $b = \frac{D - D1}{2}$ und $\mu = R/r$ ist.

8. Wirbel-Fluidzähler nach einem der Ansprüche 1 bis 6, dadurch gekennzeichnet, daß die innere Wandung (4d) des ersten Abschnitts (4) der Rohrleitung eine lokale, innere Kontur aufweist, die in einer die Symmetrieachse der Rohrleitung enthaltenden Ebene teilweise durch eine sinusförmige Kurve gebildet ist.

9. Wirbel-Fluidzähler nach einem der Ansprüche 1 bis 8, dadurch gekennzeichnet, daß der Durchmesser D1 des zweiten Abschnitts (6) der Rohrleitung einen Wert hat, der zwischen 60 und 90% des Wertes des anfänglichen Durchmessers D liegt.

10. Wirbel-Fluidzähler nach Anspruch 9, dadurch gekennzeichnet, daß der Durchmesser D1 einen Wert hat, der vorzugsweise zwischen 70 und 80% des Wertes des anfänglichen Durchmessers D liegt.

11. Wirbel-Fluidzähler nach einem der vorstehenden Ansprüche, dadurch gekennzeichnet, daß der zweite Abschnitt (6) der Rohrleitung eine Länge hat, die zwischen 1,5 und 3 mal dem Durchmesser D1 ist.

12. Wirbel-Fluidzähler nach einem der vorstehenden Ansprüche, dadurch gekennzeichnet, daß das Verhältnis d/D1 zwischen 0,15 und 0,30 liegt.

13. Wirbel-Fluidzähler nach Anspruch 1, dadurch gekennzeichnet, daß das Hindernis (8) eine stromaufwärts liegende Stirnfläche (8a) und eine stromabwärts liegende Stirnfläche (8b), die zueinander parallel und senkrecht zur Strömungsrichtung des Fluids sind, sowie zwei seitliche symmetrische Stirnflächen (8c, 8d) hat, die dem Hindernis (8) einen trapezförmigen Querschnitt geben, wobei die Basis des Trapezes stromaufwärts gelegen ist.

14. Wirbel-Fluidzähler nach den Ansprüchen 1 und 13, dadurch gekennzeichnet, daß die stromaufwärts liegende Stirnfläche (8a) des Hindernisses (8) in einem Abstand von dem ersten Abschnitt (4) der Rohrleitung angeordnet ist, der zwischen 0,5D1 und D1 liegt.

15. Wirbel-Fluidzähler nach einem der vorstehenden Ansprüche, dadurch gekennzeichnet, daß die Mittel zum Detektieren des Signals, das den Schwingungen der Wirbel entspricht, und zum Bestimmen des Volumens des Fluids hieraus von dem Hindernis (8) abhängig sind.

16. Wirbel-Fluidzähler nach Anspruch 15, dadurch gekennzeichnet, daß die Mittel zum Detektieren des Signals, das den Schwingungen der Wirbel entspricht, und zum Bestimmen des Volumens des Fluids hieraus zwei longitudinale Hauptkanäle (10, 12), die zueinander parallel sind und symmetrisch in dem Hindernis (8) in unmittelbarer Nähe der seitlichen Stirnflächen (8c, 8d) angeordnet sind, sowie mehrere Sekundärkanäle (10a, 10b, 10c, 12a, 12b, 12c), die gleichmäßig verteilt sind und die die Hauptkanäle (10, 12) senkrecht mit den seitlichen Stirnflächen (8c, 8d) verbinden, und einen Aufnehmer enthalten, der einerseits mit den Hauptkanälen (10, 12) und andererseits mit einer elektronischen Schaltung (202-221) verbunden ist, die das Bestimmen des Volumens des Fluids aus dem detektierten Signal erlaubt.

17. Wirbel-Fluidzähler nach einem der Ansprüche 1 bis 14, dadurch gekennzeichnet, daß die Mittel zum Detektieren des Signals, das den Schwingungen der Wirbel entspricht, und zum Bestimmen des Volumens des Fluids eine Platte (14), die in der Mitte der Fluidströmung stromabwärts des Hindernisses (8) und in dem zweiten Abschnitt (6) der Rohrleitung angeordnet ist, wobei die Platte (14) senkrecht zur Strömungsrichtung des Fluids eine longitudinale Abmessung D1 und einen rechteckigen Querschnitt hat, der durch zwei große, als seitlich bezeichnete Stirnflächen (14, 14b), die parallel zur Strömungsrichtung des Fluids sind, und zwei kleine, jeweils als stromaufwärts und stromabwärts liegend bezeichnete Stirnflächen (14c, 14d) gebildet ist, zwei longitudinale, parallele Hauptkanäle (16, 18), die in der Platte (14) in unmittelbarer Nähe der stromaufwärts liegenden Stirnfläche (14c) angeordnet sind, wobei jeder der Hauptkanäle mit einer einzigen der seitlichen Stirnflächen (14a, 14b) über mehrere Sekundärkanäle (16a, 16b, 16c, 18a, 18b, 18c) verbunden ist, die senkrecht und gleichmäßig verteilt sind, und einen Aufnehmer enthalten, der einerseits mit den Hauptkanälen (16, 18) und andererseits mit einer elektronischen Schaltung (202-221) verbunden ist, die das Bestimmen des Volumens des Fluids aus dem detektierten Signal erlaubt.

18. Wirbel-Fluidzähler nach Anspruch 17, dadurch gekennzeichnet, daß die stromaufwärts liegende Stirnfläche (14c) der Platte (14) eine transversale Abmessung hat, die zwischen 0,1 und 0,4 mal der transversalen Abmessung d des Hindernisses (8) liegt.

19. Wirbel-Fluidzähler nach den Ansprüchen 13 und 17, dadurch gekennzeichnet, daß die stromaufwärts liegende Stirnfläche (14c) der Platte (14) in einem Abstand von der stromaufwärts liegenden Stirnfläche (8a) des Hindernisses (8) liegt, der zwischen 3 und 7d liegt.

20. Wirbel-Fluidzähler nach den Ansprüchen 17 und 19, dadurch gekennzeichnet, daß die Hauptkanäle (16, 18) einen Durchmesser haben, der geringfügig unterhalb der transversalen Abmessung der stromaufwärts liegenden Stirnfläche (14c) der Platte (14) liegt, und daß die Hauptkanäle (16, 18) in Strömungsrichtung des Fluids zueinander versetzt sind.

21. Wirbel-Fluidzähler nach Anspruch 16 oder 17, dadurch gekennzeichnet, daß der Aufnehmer ein thermischer Aufnehmer ist.

22. Wirbel-Fluidzähler nach Anspruch 16 oder 17, dadurch gekennzeichnet, daß der Aufnehmer ein Druckaufnehmer ist.

## Claims

1. A vortex fluid meter (1) comprising:

   - a pipe (2) having a maximum inside diameter D in which the fluid flows,
   - at least one obstacle (8) disposed in the middle of the fluid flow and adapted to generate oscillatory vortices in the fluid, said obstacle (8) having an elongate general shape of longitudinal dimension D1 and of transverse dimension $d$ perpendicular to the fluid flow direction,
   - means (10, 10a, 10b, 10c, 12, 12a, 12b, 12c, 14, 16, 16a, 16b, 16c, 18, 18a, 18b, 18c, 200-221) for detecting the signal corresponding to the oscillations of the vortices and deducing the volume of fluid therefrom, said pipe (2) having an internal profile comprising from the upstream end to the downstream end: a first pipe portion (4) progressively reducing the inside diameter of said pipe to a value D1 and having an inside wall (4a, 4b, 4c, 4d) at a continuously varying angle to the general direction of flow of the fluid, said angle having a null value at locations in the pipe at which the diameter of said first portion (4) is respectively equal to D and D1, a second pipe portion (6) of constant diameter D1 in which the obstacle (8) is located, and a third pipe portion (20) returning the inside diameter of the pipe (2) to its original value D, characterized in that the third pipe portion is adapted to detach the boundary layer of the fluid flow at a downstream end (6a) of said second pipe portion (6).

2. A vortex fluid meter according to claim 1, characterized in that the third pipe portion (20) has a sharp edge (20a) at an upstream end coincident with the downstream end (6a) of the second pipe portion (6) and, downstream of said sharp edge (20a), an inside wall (20b) at a constant angle $\alpha$ in the range 9° to 20° to the direction of the flow of the fluid.

3. A vortex fluid meter according to claim 2, characterized in that the angle $\alpha$ is preferably in the range 10° to 15°.

4. A vortex fluid meter according to claim 1, characterized in that the third pipe portion (20) has at its upstream end coincident with the downstream end (6a) of the second portion (6) a flange (22) having an outside diameter D1, an inside diameter D2 less than D1 and an inside edge (22a) forming a sharp edge.

5. A vortex fluid meter according to claim 4, characterized in that the flange (22) has a longitudinal dimension (D1 - D2)/2 in the range 2% to 5% of the diameter D1 of the second pipe portion (6).

6. A vortex fluid meter according to claim 4 or 5, characterized in that, in a plane containing the axis of symmetry of the pipe, the flange (22) has a local cross-section which is uniform and triangular, the apex of the triangle constituting the local inside edge (22a) of said flange.

7. A vortex fluid meter according to any one of the preceding claims, characterized in that the inside wall (4a, 4b, 4c) of the first pipe portion (4) has a local inside profile formed, in a plane containing the axis of symmetry of the pipe, in the upstream to downstream direction, by two successive circular arcs with their concave sides facing opposite ways, corresponding to circles of radius $r$ and R satisfying the equation

$$r = (a^2 + b^2)/2b(\mu+1)$$

   where:

   $a = \sqrt{b[2(R+r)-b]}$
   $b = (D-D1)/2$
   $\mu = R/r$

8. A vortex fluid meter according to any one of claims 1 to 6, characterized in that the inside wall (4d) of the first pipe portion (4) has a local internal profile which is formed in a plane containing the axis of symmetry of the pipe by a portion of a sinusoidal curve.

9. A vortex fluid meter according to any one of claims 1 to 8, characterized in that the diameter D1 of the second pipe portion (6) has a value in the range 60% to 90% of the value of the original diameter D.

10. A vortex fluid meter according to claim 9, characterized in that the diameter D1 lies preferably in the range 70% to 80% of the original diameter D.

11. A vortex fluid meter according to any one of the preceding claims, characterized in that the second pipe portion (6) has a length in the range 1.5 times to 3 times the diameter D1.

12. A vortex fluid meter according to any one of the preceding claims, characterized in that the ratio d/D1 lies in the range 0.15 to 0.30.

13. A vortex fluid meter according to claim 1, characterized in that the obstacle (8) has an upstream face (8a) and a downstream face (8b) parallel to each other and perpendicular to the direction of fluid flow, and two symmetrical lateral faces (8c, 8d) whereby the transverse cross-section of said obstacle (8) is trapezium-shaped, the base of said trapezium being on the upstream side.

14. A vortex fluid meter according to claims 1 and 13, characterized in that the upstream face (8a) of the obstacle (8) is at a distance from the first pipe portion (4) in the range 0.5D1 to D1.

15. A vortex fluid meter according to any one of the preceding claims, characterized in that the means for detecting the signal corresponding to oscillations of the vortices and for deducing the volume of fluid therefrom are attached to the obstacle (8).

16. A vortex fluid meter according to claim 15, characterized in that the means for detecting the signal corresponding to oscillations of the vortices and for deducing the volume of fluid therefrom comprise two parallel main longitudinal passages (10, 12) symmetrically disposed in the obstacle (8) near lateral faces (8c, 8d) of the latter together with a plurality of evenly distributed secondary passages (10a, 10b, 10c, 12a, 12b, 12c) connecting said main passages (10, 12) in a direction perpendicular to said lateral faces, (8c, 8d) and a sensor connected to the main passages (10, 12) and to an electronic circuit (202-221) for deducing the volume of fluid from the said detected signal.

17. A vortex fluid meter according to any one of claims 1 to 14, characterized in that the means for detecting the signal corresponding to oscillations of the vortices and for deducing the volume of fluid therefrom comprise a plate (14) disposed in the middle of the fluid flow downstream of the obstacle (8) and in the second pipe portion (6), said plate (14) having a longitudinal dimension D1 perpendicular to the direction of flow of the fluid and a rectangular cross-section formed by two larger lateral faces (14a, 14b) parallel to the direction of flow of the fluid and two smaller upstream and downstream faces (14c, 14d), two parallel longitudinal main passages (16, 18) in said plate (14) near said upstream face (14c), each of said main passages being connected to one only of said lateral faces (14a, 14b) by a plurality of evenly distributed perpendicular secondary passages (16a, 16b, 16c, 18a, 18b, 18c), and a sensor connected to the main passages (16, 18) and to an electronic circuit (202-221) for deducing the volume of fluid from the said detected signal.

18. A vortex fluid meter according to claim 17, characterized in that the upstream face (14c) of the plate (14) has a transverse dimension in the range 0.1 times to 0.4 times the transverse dimension $\underline{d}$ of the obstacle (8).

19. A vortex fluid meter according to claims 13 and 17, characterized in that the upstream face (14c) of the plate (14) is at a distance from the upstream face (8a) of the obstacle (8) in the range 3d to 7d.

20. A vortex fluid meter according to claims 17 and 19, characterized in that the main passages (16, 18) have a diameter slightly less than the transverse dimension of the upstream face (14c) of the plate (14) and in that said main passages (16, 18) are offset relative to each other in the direction of flow of the fluid.

21. A vortex fluid meter according to claim 16 or 17, characterized in that the sensor is a heat sensor.

22. A vortex fluid meter according to claim 16 or 17, characterized in that the sensor is a pressure sensor.

FIG.1

FIG.2

FIG.4

FIG.3a

FIG.3b

FIG.3c

FIG.3d

FIG.5

FIG.6

FIG.7

EP 0 752 093 B1

**FIG.8**

**FIG.9**

**FIG.11**

**FIG.12**

18

FIG.10

EP 0 752 093 B1

FIG.13

SIGNAL
DE SORTIE

SIGNAL
D'ENTREE

FIG.14